# EUROPEAN PATENT SPECIFICATION

(11) **EP 1 759 469 B1**
(45) Date of publication and mention of the grant of the patent: **01.12.2010**
(21) Application number: 05756707.5
(22) Date of filing: 17.06.2005
(51) Int. Cl.: H04W 36/08, H04W 36/18

(54) **A METHOD OF AND A SYSTEM FOR TRANSMITTING SCHEDULING COMMAND FOR UPLINK ENHANCED DEDICATED CHANNEL IN HANDOVER**
VERFAHREN UND SYSTEM ZUR ÜBERTRAGUNG VON TERMINIERUNGSBEFEHLEN FÜR UPLINK-GESTÜTZTE DEDIZIERTE KANÄLE BEI DER WEITERREICHUNG
PROCEDE ET SYSTEME D'EMISSION D'UNE COMMANDE DE PLANIFICATION POUR UNE VOIE SPECIALISEE AMELIOREE DE LIAISON MONTANTE LORS D'UN TRANSFERT

(30) Priority: 18.06.2004 KR 2004045577
(43) Date of publication of application: 07.03.2007
(73) Proprietor: LG Electronics Inc., Seoul 150-721 (KR)
(72) Inventor: KIM, Bong Hoe, Bono-dong, Ansan-si, Gyeonggi-do (KR); AHN, Joon Kui, Dongjak-gu, Seoul 156-781 (KR); KIM, Hak Seong, Gwanak-gu, Seoul 151-764 (KR); ROH, Dong Wook, Gwanak-gu, Seoul 151-870 (KR); SEO, Dong Youn, Gangnam-gu, Seoul 135-830 (KR); WON, Seung Hwan, Gwacheon-si, Gyeonggi-do 427-732 (KR)
(74) Representative: Urner, Peter
(86) International application number: PCT/KR2005/001861
(87) International publication number: WO 2005/122704

(56) References cited:
- WO-A2-03/067783
- SAMSUNG: 'E-DCH Scheduling in SHO' R1-030246, 3GPP TSG-RAN WG1 #31, [Online] 18 February 2003, XP003007010 Retrieved from the Internet: <URL:http://www.3gpp.org/ftp/tsg_ran/wg1_rl 1/TSGR1_31/Docs/Zips/R1-030246.zip>
- PARK S. ET AL.: 'Uplink Transmit Power Control during Soft Handoff in DS/CDMA Systems' IEEE 54TH VEHICULAR TECHNOLOGY CONFERENCE, VTC FALL 2001. NEW YORK; IEEE 2001, XP001076292

## Description

### Technical Field

The present invention relates to a method of and a system for transmitting a scheduling command, and more particularly, to a method of and a system for transmitting a scheduling command for uplink enhanced dedicated channel (E-DCH) in handover.

### Background Art

Currently in the mobile communication system, various methods are being considered for improving capability of uplink transmission, such as Node B controlled scheduling, Hybrid Automatic Repeat Request (HARQ).

Traditionally, the RNC transmits a Transport Format Combination Set (TFCS) to a user equipment (UE). Here, the TFCS signifies a set of transport format combinations (TFC) which can be selected by the UE. The UE manages the arrangement of the TFCs. In other words, a TFC demanding higher transmit power than the maximum transmit power provided by the UE is excluded from the pool of allowable TFCs. However, if the transmit power demanded by the excluded TFC changes to fall within the allowable TFC transmit power range, the excluded TFC can be included in the pool of the allowable TFCs. This operation is provided in higher layer of the UE. A Radio Controlled Network (RNC) informs Node B of the maximum allowable transmit power of the UE. Since this type of RNC scheduling is inefficient and relatively rough, it is possible to improve the efficiency of uplink transmission by transferring the scheduling entity to Node B. With Node B controlled scheduling, uplink load can be controlled relatively quickly and uplink capacity can also be improved.

With the RNC out of the picture with respect to scheduling command in Node B controlled scheduling, a base station or Node B transmits a scheduling command to the UE in the downlink direction. Furthermore, if the UE is located in an overlapping cell coverage area, the UE communicates with at least one cell or sector in handover.

In handover, the base station transmits the scheduling command via at least one cell or sector, where the scheduling command transmitted to each cell or sector can be different or independent of other scheduling command. Therefore, the UE may not adequately combine each independent scheduling command transmitted via different cells or sectors and thus encounter deterioration of detection capability. In addition, the UE may encounter difficulty in detecting signal transmitted from the base station via only one cell or sector due to relatively possible poor channel status.

The article: 'E-DCH Scheduling in SHO' R1-030246, 3GPP TSG-RAN WG1 #31, [ONLINE] 18 February 2003, XP003007010 which is contributed by Samsung describes a scheduling method which is directed to a general case of Node B controlled scheduling in soft handover, wherein multiple active set base stations are involved in enhanced dedicated channel (E-DCH) reception. When all active set Node Bs send the scheduling command to a user equipment (UE), the UE may receive different scheduling commands from the active set Node Bs because of different UL noise condition for each active set Node B. Then, the possible UE operations upon receiving different scheduling commands can be classified according to scheduling aggressiveness, such as, aggressive scheduling, conservative scheduling, and intermediate aggressiveness scheduling.

WO 03 067783 A2 describes a power control method for serving and non-serving base stations. Power control commands for a plurality of base stations are combined to form a single command to control the plurality of base station. Further, an "Or-of-up" rule may be used to combine the power command. And, a channel quality indicator is used to power control a serving base station. It provides the benefit of providing efficient power control between a mobile station and both serving and non-serving base stations, thus avoiding excessive interference and increasing capacity.

PARK S. ET AL.: 'Uplink Transmit Power Control during Soft Handoff in DS/CDMA Systems', IEEE 54TH VEHICULAR TECHNOLOGY CONFERENCE, VTC FALL 2001. NEW YOU; IEEE 2001, XP001076292, describes a method of controlling the uplink transmit power of a mobile station during soft handoff in order to reduce the error probability of downlink transmit power control command bit without macro diversity gain at the base station controller (BSC). The uplink transmit power control is based on uplink transmit power control commands from all base stations (BS's) belonging to the active set. The proposed scheme can be applied to third generation mobile communication systems since an MS receives uplink (UL) transmit power control bits (TPCB's) from its base stations and sends a downlink (DL) transmit power control bit (TPCB) to them.

### Disclosure of the Invention

Accordingly, the present invention is directed to a method of transmitting a scheduling command that substantially obviates one or more problems due to limitations and disadvantages of the related art.

An object of the present invention is to provide a method of transmitting a scheduling command to a user equipment in handover from a base station having a plurality of cells.

Another object of the present invention is to provide a method of receiving a scheduling command from a base station having a plurality of cells in handover.

A further object of the present invention is to provide a method of transmitting and receiving a scheduling command in handover.

Another object of the present invention is to provide a communication system for transmitting and receiving a scheduling command in handover.

The object is solved by the features of the independent claims.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

It is to be understood that both the foregoing general description and the following detailed description of the present invention are exemplary and explanatory and are intended to provide further explanation of the invention as claimed.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings;
FIG. 1 illustrates an operation of transmitting a scheduling command during handover.
FIG. 2 illustrates an operation of receiving scheduling commands during handover.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

An enhanced uplink dedicated channel (E-DCH) has been proposed as a channel for high-speed data transmission in uplink direction with Node B controlled scheduling and the HARQ. Regarding the Node B controlled scheduling, the E-DCH is used to transmit a scheduling command from a base station (Node B) to a user equipment (UE).

For a more efficient means of transmitting scheduling command, Node B controlled scheduling is implemented over the RNC controlled scheduling. As discussed above, the RNC controlled scheduling is inefficient compared to the Node B controlled scheduling.

The scheduling command composed at Node B can be scheduled based on rate as well as time and rate. The scheduling schemes are not limited to rate scheduling and time and rate scheduling. As another example of scheduling means, the scheduling by Node B can also be based on transmission power level.

In the rate scheduling, transmission takes place based on the rate. The rate can be in terms of data or power. In operation, the RNC transmits information on transport format combination sets (TFCS) to Node B and the UE during setup. Thereafter, the transmitted TFCS is controlled in a stepwise manner by Node B, similar to controlling power level. To put differently, Node B controls in a stepwise manner the maximum transport format combinations (TFC) allowed for transmission from the TFCS of the UE.

For example, assume there are 100 TFCS belonging to a UE, arranged in order of transmission power levels from strongest to weakest. If the TFC index is set at a certain power level, say 50, Node B can include up/down command to control the maximum TFC by which the UE transmits in the uplink direction. Subsequently, the maximum TFC would be 51 if 'up' command is included or 49 if 'down' command in ordered. Here, the UE is allowed to transmit according to the index range set by Node B scheduling.

The operation of the time and rate scheduling is different from the rate scheduling. In the time and rate scheduling, the maximum TFC of the UE is not controlled in a stepwise manner. Instead, Node B directly notifies the UE the time and the rate at which to transmit the maximum TFC. Again, the rate can be based on data or power. Here, the time for transmission, for example, can be a specific time, a specified time period, or a multiple time periods. At the same time, the transmission of maximum TFC is also controlled in conjunction with time.

For example, Node B can notify the UE a specified time period in which to transmit the maximum TFC. If a certain time period is available for transmission at the maximum transmission rate, Node B notifies the UE of the available time slot(s). The UE can then transmit the TFC during this period at the maximum transmission rate. Compared to the rate scheduling scheme, the time and rate scheduling scheme is more efficient and advantageous.

In the embodiment of the present invention, the downlink scheduling command from Node B to the UE takes place in an enhanced uplink dedicated channel (E-DCH) for high speed transmission. In particular, Node B transmits scheduling command to the UE in handover via at least one of a plurality of cells.

The plurality of cells belongs to a group of cells or sectors, which form connections to the UE, called an active set. Preferably, the active set is the E-DCH active set. By transmitting the same scheduling command to all the cells (or sectors) in the active set, diversity gain can be achieved by the UE through increased scheduling command detection. For example, by transmitting the scheduling command to the UE via the cells (or sectors) in the active cell rather than via certain cells, the chance for the UE to receive or detect the scheduling command is greater than transmitting via a limited number of cells (or sectors).

During handover, a UE is in the overlapping cell coverage area of two adjacent cells. Here, a cell can also be referred to as a sector. Moreover, handover between cells (or sectors) sharing Node B is often referred as softer handover, while handover between cells having Node B located in each cell is often referred to as soft handover. Preferably, softer handover applies to the embodiment of the present invention.

In handover between cells (or soft handover or softer handover), the communication between a UE and Node B takes place concurrently via two air interface channels, one for each cell (or sector) separately. Traditionally, this requires the use of two separate signals in the downlink direction, so that the UE can distinguish the signals. The two signals are received in the UE, for example, by means of Rake processing, very similar to multipath reception.

However, according to the embodiment of the present invention, instead of transmitting two separate signals in the downlink direction, a same signal or scheduling command can be transmitted to the UE in the overlapping cell coverage area via at least one of plurality of cells. Because a single base station can exist for the coverage area having a plurality of cells, the same signal or scheduling command can be transmitted via at least one cell without any modifications by Node B.

In the scheduling command, Node B can include information pertaining to power level or data rate by which to transmit data in the uplink direction. The command includes a specific transmission power level (or data rate) by which the UE can transmit in the uplink direction. For example, if Node B sets power level or rate at 50, the UE has to transmit at this specific power level (or data rate). This type of scheduling command can be referred to as absolute grant (AG).

In addition, Node B can include information that pertains to increasing or decreasing the power level (or data rate) for transmission. More specifically, Node B commands the UE to either increase or decrease the power (or data rate) with respect to previous or existing power (or data rate) before transmitting in the uplink direction. Here, instead of providing a specific power (or data rate), Node B provides a command, usually UP or DOWN. For example, if the specified or existing power level is 50, the RG refers to the change in the power level by a certain amount. Here, if the change in power level is one level, the range of power level can be from 49 to 51. This type of scheduling command can be referred to as relative grant (RG).

The scheduling command of the RG is usually comprised of one (1) bit and is usually a command indicating UP or DOWN. The RG provides a permissible transmission power level range in which uplink transmission can take place with respect to a specific power level. The power level of AG can be used as reference in using the RG.

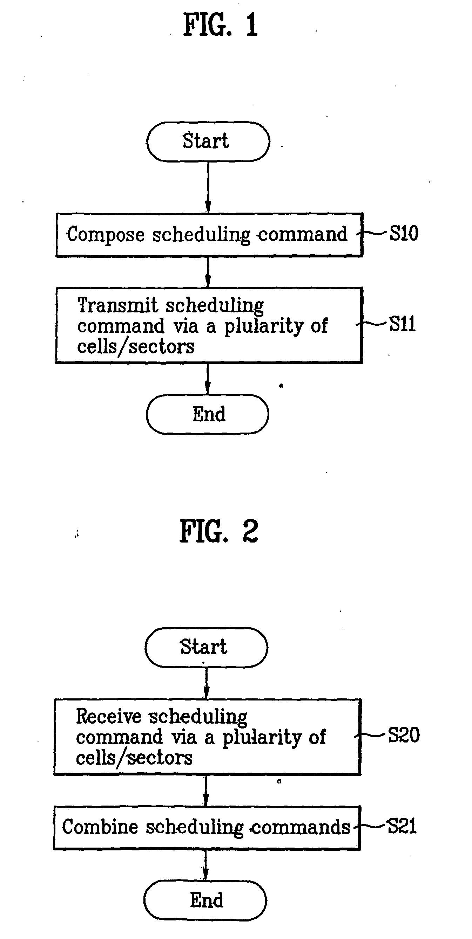

As mentioned above, handover takes place between cells when receiving a signal or scheduling command from Node B. Although a scheduling command can be transmitted is soft handover as well as softer handover, it is desirable to transmit during softer handover in the embodiment of the present invention. Figures 1 and 2 illustrate the operation of transmitting and receiving a scheduling command to the UE in handover. Node B composes a scheduling command to transmit to the UE during handover (S10). As discussed above, a UE is in the overlapping cell coverage area of a plurality of cells of Node B (or base station) during handover. Here, the same scheduling command is transmitted to the UE via a plurality of cells, namely, two adjacent cells (S11). As the scheduling command is transmitted via two adjacent cells during handover, for example, preferably, the UE also has knowledge that the transmitted scheduling commands are the same. The scheduling command can be the AG and/or the RG. As such, since the UE has knowledge that the scheduling commands received via different cells contain the same command information, the UE combines the scheduling commands to confirm the command (S21). Combining the scheduling command reduces error and provides for more accurate confirmation of the command.

For example, assume that Node B transmits a scheduling command to the UE to transmit at a higher power level. The UP command is indicated by a positive value "1." Similarly, to indicate a power level decrease or DOWN command, a negative value "0" is used. Upon receipt of the UP command by the UE via two adjacent cells, since the UE knows to combine the scheduling command, the combined sum is two, which is a positive number greater than one. Therefore, the UE is able to confirm that the scheduling command is for the UE to increase the transmission power level. On the contrary, if the command was to decrease the power level for transmission, the combined value of "0" indicates such.

If different scheduling command is transmitted via a plurality of cells and/or the UE does not know to combine the received scheduling command, then the UE may not be able to ascertain the command. There is no guarantee that the command from Node B is always received without hitches or problems. Poor channel status could hamper proper reception, for example. Consequently, by transmitting the same scheduling command via at least one cell and by combining the received scheduling commands by the UE, the transmission error can be reduced and the command can be confirmed more accurately.

## Claims

1. A method of receiving, at a user equipment in handover, multiple relative grants from a plurality of sectors of a base station, the method is **characterized by:**
receiving (S20), at the user equipment, the multiple relative grants from the plurality of sectors via downlink channels, wherein the multiple relative grants have the same information, and wherein the user equipment has a prior knowledge, before the receiving, that the base station sets all of the relative grants to have the same information;
combining (S21), at the user equipment, the multiple relative grants into one single relative grant information:
wherein each relative grant is a scheduling command indicating a change in a transmission data rate of the user equipment by a predetermined amount.

2. The method of claim 1, wherein the plurality of sectors used in receiving the multiple relative grants belong to an enhanced dedicated channel (E-DCH) active set.

3. The method of claim 1, wherein the change indicates a unit decrease in the transmission data rate or a unit increase in the transmission data rate.

4. A communication system for transmitting and receiving multiple relative grants in handover, **characterized by:**
a base station (BS) for composing the multiple relative grants and transmitting the multiple relative grants in a plurality of sectors, wherein the multiple relative grants have the same information, and
a user equipment (UE) for receiving the multiple relative grants from the plurality of sectors via downlink channels, wherein the user equipment has a prior knowledge, before the receiving, that the base station sets all of the relative grants to have the same information;
wherein the user equipment (UE) is adapted to combine the multiple relative grants into one single relative grant information;
wherein each relative grant is a scheduling command indicating a change in a transmission data rate of the user equipment by a predetermined amount.

5. The system of claim 4, wherein the scheduling command includes a command to increase or decrease the transmission data rate.

6. The system of claim 4, wherein the plurality of sectors used in transmission of the multiple relative grants belong to an enhanced dedicated channel (EDCH) active set.

## Patentansprüche

1. Verfahren, um bei einem Anwendergerät bei der Weiterleitung mehrere relative Gewährungen von mehreren Sektoren einer Basisstation zu empfangen, wobei das Verfahren **gekennzeichnet ist durch:**
Empfangen (S20) der mehreren relativen Gewährungen von den mehreren Sektoren über Abwärtsstreckenkanäle bei dem Anwendergerät, wobei die mehreren relativen Gewährungen dieselben Informationen besitzen und wobei das Anwendergerät eine vorherige Kenntnis vor dem Empfang besitzt, dass die Basisstation alle relativen Gewährungen so festlegt, dass sie dieselben Informationen besitzen;
Kombinieren (S21) der mehreren relativen Gewährungen zu einer einzigen relativen Gewährungsinformation bei dem Anwendergerät;
wobei jede relative Gewährung ein Zeitplanungsbefehl ist, der eine Änderung der Übertragungsdatenrate des Anwenderendgeräts um einen vorgegebenen Betrag angibt.

2. Verfahren nach Anspruch 1, wobei die mehreren Sektoren, die beim Empfang der mehreren relativen Gewährungen verwendet werden, zu einer aktiven Menge eines Enhanced Dedicated Channel (E-DCH) gehören.

3. Verfahren nach Anspruch 1, wobei die Änderung eine Einheitsabnahme der Übertragungsdatenrate oder eine Einheitszunahme der Übertragungsdatenrate angibt.

4. Kommunikationssystem zum Senden und Empfangen mehrerer relativer Gewährungen im Weiterleitungsverfahren, **gekennzeichnet durch:**
eine Basisstation (BS), um die mehreren relativen Gewährungen zusammenzusetzen und um die mehreren relativen Gewährungen in mehreren Sektoren zu senden, wobei die mehreren relativen Gewährungen dieselben Informationen besitzen, und
ein Anwendergerät (UE), um die mehreren relativen Gewährungen von den mehreren Sektoren über Abwärtsstreckenkanäle zu empfangen, wobei das Anwendergerät eine vorherige Kenntnis vor dem Empfang hat, dass die Basisstation alle relativen Gewährungen so festlegt, dass sie dieselben Informationen besitzen;
wobei das Anwendergerät (UE) dazu ausgelegt ist, die mehreren relativen Gewährungen zu einer einzigen relativen Gewährungsinformation zu kombinieren;
wobei jede relative Gewährung ein Zeitplanungsbefehl ist, der eine Änderung der Übertragungsdatenrate des Anwendergeräts um einen vorgegebenen Betrag angibt.

5. System nach Anspruch 4, wobei der Zeitplanungsbefehl einen Befehl zum Erhöhen oder Erniedrigen der Übertragungsdatenrate enthält.

6. System nach Anspruch 4, wobei die mehreren Sektoren, die bei der Übertragung der mehreren relativen Gewährungen verwendet werden, zu einer aktiven Menge eines Enhanced Dedicated Channel (E-DCH) gehören.

## Revendications

1. Procédé de réception, dans un équipement d'utilisateur en transfert intercellulaire, de plusieurs octrois relatifs provenant d'une pluralité de secteurs d'une station de base, le procédé étant **caractérisé par** :
la réception (S20), dans l'équipement d'utilisateur, des différents octrois relatifs de la pluralité de secteurs via des canaux de liaison descendante, les différents octrois relatifs ayant la même information, et dans laquelle l'équipement d'utilisateur a comme connaissance préalable, avant la réception, que la station de base règle tous les octrois relatifs de façon qu'ils aient tous la même information ;
la combinaison (S21), dans l'équipement d'utilisateur, des différents octrois relatifs en une seule information d'octroi relatif ;
dans lequel chaque octroi relatif est une instruction de planification indiquant un changement dans un débit d'émission de l'équipement d'utilisateur d'une valeur prédéterminée.

2. Procédé selon la revendication 1, dans lequel la pluralité de secteurs utilisés dans la réception des différents octrois relatifs appartiennent à un ensemble actif de canaux dédiés évolués (canaux E-DCH).

3. Procédé selon la revendication 1, dans lequel le changement indique une diminution unitaire du débit d'émission ou une augmentation unitaire du débit d'émission.

4. Système de communication pour transmettre et recevoir plusieurs octrois relatifs dans un transfert intercellulaire, **caractérisé par** :
une station de base (BS) pour composer les octrois relatifs et transmettre les octrois relatifs dans une pluralité de secteurs, les différents octrois relatifs ayant la même information, et
un équipement d'utilisateur (UE) pour recevoir les octrois relatifs de la pluralité de secteurs via des canaux de liaison descendante, dans lequel l'équipement d'utilisateur a comme connaissance préalable, avant la réception, que la station de base règle tous les octrois relatifs de façon qu'ils aient tous la même information ;
dans lequel l'équipement d'utilisateur (UE) est adapté pour combiner les différents octrois relatifs en une seule information d'octroi relatif ;
dans lequel chaque octroi relatif est une instruction de planification indiquant un changement dans un débit d'émission de l'équipement d'utilisateur d'une valeur prédéterminée.

5. Système selon la revendication 4, dans lequel l'instruction de planification comprend une instruction pour augmenter ou diminuer le débit d'émission.

6. Système selon la revendication 4, dans lequel la pluralité de secteurs utilisés dans la transmission des différents octrois relatifs appartiennent à un ensemble actif de canaux dédiés évolués (canaux EDCH).
